(19) Europäisches Patentamt / European Patent Office / Office européen des brevets

(11) **EP 3 650 166 A1**

(12) **DEMANDE DE BREVET EUROPEEN**

(43) Date de publication:
**13.05.2020 Bulletin 2020/20**

(21) Numéro de dépôt: **19204422.0**

(22) Date de dépôt: **21.10.2019**

(51) Int Cl.:
**B23P 19/06** (2006.01)     **B25B 23/14** (2006.01)
**G05B 19/4065** (2006.01)     **G01L 5/24** (2006.01)
**G08B 21/18** (2006.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **09.11.2018 FR 1860400**

(71) Demandeur: **ETABLISSEMENTS GEORGES
RENAULT**
**44800 Saint Herblain (FR)**

(72) Inventeur: **JOUSSET, Nicolas**
**44200 COUERON (FR)**

(74) Mandataire: **Vidon Brevets & Stratégie**
**16B, rue de Jouanet**
**BP 90333**
**35703 Rennes Cedex 7 (FR)**

(54) **PROCEDE DE CONTROLE D'UN NIVEAU DE QUALITE DE VISSAGE D'UNE VISSEUSE,
DISPOSITIF ASSOCIE ET PROGRAMME METTANT EN OEUVRE LE PROCEDE**

(57) Procédé de contrôle d'un niveau de qualité de vissage d'une visseuse par rapport à un objectif de vissage prédéterminé, mis en œuvre durant le vissage d'au moins un assemblage et comprenant les étapes suivantes :
- obtention (4.3), à une fréquence angulaire prédéterminée, d'une série de doublets représentative de la montée en couple du vissage d'au moins une vis, constituant une première table de valeurs, chaque doublet comprenant une valeur d'angle et une valeur de couple ;
- détermination (4.4), à partir de ladite première table de valeurs, d'une deuxième table de valeurs présentant le couple en fonction de l'angle, et représentative de la caractéristique vraie de l'au moins une vis ;
- détermination (4.5.1) d'une troisième table de valeurs présentant le couple en fonction de l'angle et représentative des perturbations induites par ladite visseuse lors de la montée en couple du vissage d'au moins une vis, à partir des première et deuxième tables ;
- analyse de la troisième table (4.5.2, 4.5.3, 4.5.4, 4.5.5, 4.5.6, 4.6), délivrant au moins une information représentative d'une dispersion et/ou d'un écart par rapport audit objectif de vissage, résultant de perturbations induites par ladite visseuse.

| 4.1 | Mise en marche de l'outil |
| 4.2 | Mesures du couple et enregistrement des valeurs |
| 4.3 | Détermination de la première table représentative du couple en fonction de l'angle, pour des valeurs d'angle de pas constant |
| 4.4 | Estimation de la caractéristique théorique du vissage |

4.5
| 4.5.1 | Obtention d'informations représentatives des perturbations générées par l'outil |
| 4.5.2 | Transformée de Fourier |
| 4.5.3 | Choix d'une caractéristique linéaire (raideur) et détermination de la courbe de montée en couple associée à la raideur du vissage |
| 4.5.4 | Sommation de la caractéristique linéaire et de la courbe représentant l'amplitude et la fréquence de la perturbation |
| 4.5.5 | Maximisation par suppression des décroissances du couple |
| 4.5.6 | Détermination d'une courbe normalisée par soustraction des valeurs de la caractéristique linéaire |

4.6
| 4.6.1 | Calcul de l'écart global par rapport audit objectif de vissage et de l'écart-type induits par chaque signature vibratoire |
| 4.6.2 | Calcul de l'écart global par rapport audit objectif de vissage et de la dispersion globale induits par ledit ensemble des signatures vibratoires sélectionnées |

| 4.7 | Evaluation des résultats, Emission d'un signal d'alerte le cas échéant |

Fig. 4

**Description**

**1 DOMAINE TECHNIQUE**

Le domaine de l'invention est celui de l'outillage industriel, et plus précisément, des outillages prévus pour exercer un vissage avec un couple déterminé.

L'invention concerne plus précisément le contrôle de la qualité du travail effectué par de tels outillages, par exemple pour identifier un défaut ou un état d'usure de l'outil, et le cas échéant déclencher l'émission d'une alerte.

**2 ARRIERE-PLAN TECHNOLOGIQUE**

Dans le domaine de la production industrielle, d'automobiles ou d'avions par exemple, les outils de vissage sont très largement utilisés. Ces outils, qui peuvent être fixes ou portatifs (et dans ce cas équipés de batteries), intègrent des moteurs, notamment électriques ou pneumatiques selon les applications envisagées. Ces outils peuvent être connectés (par radio ou de façon filaire) à un contrôleur (qui se présente par exemple sous la forme d'un coffret) permettant de piloter différents cycles de fonctionnement.

Généralement, le vissage est asservi et l'outil effectue une mesure du couple appliqué sur la vis par la visseuse. Cette mesure est transmise au contrôleur qui vérifie que sa valeur se situe dans les limites prévues par la recette de vissage. De cette manière, le contrôleur peut déclencher l'arrêt du travail lorsque la mesure du couple atteint une valeur de seuil. Les résultats de vissage peuvent être enregistrés sur des bases de données qualité, pour un traitement *a posteriori,* et/ou utilisés par l'opérateur pour vérifier si le serrage est correct ou non.

Le contrôleur permet notamment d'assurer une traçabilité des opérations effectuées par l'outil, en assurant par exemple l'enregistrement de résultats tels que le couple final de vissage, la vitesse de vissage l'angle final de vissage, la date et l'heure des opérations ou encore les tables représentatives de la qualité (bonne ou mauvaise, en fonction de paramètres prédéterminés) du vissage effectué.

La mesure faite par le capteur équipant l'outil est une image du couple appliqué sur la vis. Cette mesure est impactée par différents éléments de transmission qui ajoutent un bruit sur le signal mesuré. La visseuse comprend au moins les éléments suivants :

- un moteur,
- un ou plusieurs trains épicycloïdaux ayant pour but d'augmenter le couple produit par le moteur,
- un capteur de couple.

Il peut également comprendre d'autres éléments, notamment un renvoi d'angle.

Tous ces éléments peuvent venir perturber le signal du capteur, qui n'est alors plus une image parfaite du couple appliqué à la vis. Ce bruit peut par exemple provoquer un arrêt ne correspondant pas à la consigne d'arrêt prédéfinie, et donc entraîner de mauvais vissages alors que la visseuse renvoie un compte-rendu positif. De plus, la dégradation des éléments de transmission peut entrainer une augmentation des bruits sur le signal mesuré. Cette augmentation du bruit génère une diminution des performances de l'outil (dégradation de la précision).

Il y a donc nécessité de contrôler la précision de ces moyens de vissage et du bon état de fonctionnement des outils, que ce soit pour le contrôle et/ou le suivi des paramètres de vissage ou pour la bonne exécution de ces paramètres.

En d'autres termes, la fiabilité des outils doit pouvoir être vérifiée, et ceci régulièrement durant toute la durée d'utilisation des outils, de façon à pouvoir effectuer une maintenance, de préférence préventive. On cherche ainsi à éviter notamment les états d'usure conduisant à une mauvaise qualité de vissage et/ou à la casse des outils sur la ligne de production, nécessitant alors l'arrêt de cette ligne pour le remplacement de l'outil. Ceci nuit bien entendu au rendement global de la ligne de production concernée.

Il est connu d'appliquer une maintenance préventive qui consiste à comptabiliser le nombre d'utilisations de l'outil (nombre de vissage, ou temps cumulé d'utilisation) et de comparer la valeur de ce compteur avec des préconisations produites par les fournisseurs d'outils, ces préconisations se traduisant par une périodicité d'entretien. Cette méthode procède à une approche empirique qui fournit une estimation statistique de l'usure d'un outil mais ne donne pas réellement son état actuel.

Il est également connu d'effectuer des contrôles réguliers, sur banc de test. Ces contrôles nécessitent un arrêt de la production, l'outil étant déplacé sur le banc de test, généralement dans un site distinct de celui de la production. Ceci entraîne un ralentissement de la production et/ou la mise en œuvre d'outils de remplacement.

La norme ISO5393 prévoit ainsi que l'on effectue au moins 25 vissages de test, pour contrôler un outil de vissage.

Les contrôles peuvent être effectués de différentes manières. Par exemple, le document FR2882287 décrit un outil de vissage comprenant un organe rotatif monté sur un corps et un capteur de mesure du couple de serrage. La mesure du couple fournit des éléments permettant de déterminer l'état d'usure des organes. Plus précisément, ce document enseigne de traiter un spectre de fréquences afin d'extraire au moins une fréquence vibratoire associée à un organe rotatif, cette fréquence est ensuite comparée avec une fréquence de référence en vue de déterminer l'état d'usure de l'organe rotatif considéré.

Ceci permet d'identifier des défectuosités que présente la visseuse mais non un niveau de précision de serrage.

Il existe donc un besoin pour mettre en œuvre une technique de contrôle de fonctionnement d'un outil de vissage afin de déterminer si le travail effectué entre dans une plage déterminée de paramètres, ou en d'autres termes, la qualité du travail, sans introduire d'interruption de la production.

Il existe également un besoin de fournir une alerte permettant en temps réel de prévenir l'utilisateur de l'incapacité de l'outil à réaliser correctement un vissage, par exemple lors de l'utilisation d'une visseuse sur une chaine d'assemblage.

Il existe enfin un besoin de fourniture rapide d'une estimation de la dispersion et de l'écart par rapport à un objectif de serrage. C'est-à-dire d'une manière plus rapide et plus simple que les tests actuellement effectués (par exemple selon la norme ISO5393).

## 3 RESUME

Selon l'invention, il est ainsi proposé un procédé de contrôle d'un niveau de qualité de vissage d'une visseuse par rapport à un objectif de vissage prédéterminé, mis en œuvre durant le vissage d'au moins un assemblage et comprenant les étapes suivantes :

- obtention, à une fréquence angulaire prédéterminée, d'une série de doublets représentative de la montée en couple du vissage d'au moins une vis, constituant une première table de valeurs, chaque doublet comprenant une valeur d'angle et une valeur de couple ;
- détermination, à partir de ladite première table de valeurs, d'une deuxième table de valeurs présentant le couple en fonction de l'angle, et représentative de la caractéristique vraie de l'au moins une vis ;
- détermination d'une troisième table de valeurs présentant le couple en fonction de l'angle et représentative des perturbations induites par ladite visseuse lors de la montée en couple du vissage d'au moins une vis, à partir des première et deuxième tables ;
- analyse de la troisième table, délivrant au moins une information représentative d'une dispersion et/ou d'un écart par rapport audit objectif de vissage, résultant de perturbations induites par ladite visseuse.

Ainsi, l'invention permet de déterminer des paramètres représentatifs d'une perturbation (liée par exemple à l'engrènement des dentures, aux perturbations électriques des signaux...). Une telle perturbation se caractérise notamment par une oscillation du signal autour de sa valeur réelle, à des fréquences et amplitudes variables. Connaissant la perturbation, il est ainsi possible de déterminer des valeurs de dispersion de l'outil ainsi qu'un défaut de calibration résultant de cette perturbation.

Il est également possible de calculer ce que seraient la dispersion et/ou l'écart par rapport à l'objectif sur une vis présentant une raideur autre que celle sur laquelle le vissage a été effectué. Ces valeurs permettent de déterminer rapidement si l'outil est toujours capable ou non d'effectuer le travail dans des conditions requises, et le cas échéant, de déclencher un signal d'alerte pour le réparer ou le changer.

L'approche de l'invention est non seulement plus rapide, mais elle permet surtout un traitement en temps réel, et directement sur chaine, contrairement aux solutions de l'art antérieur.

Le terme « table » fait référence, dans la présente description et dans les revendications, à des ensembles, ou séries, de doublets de valeurs de type (x, y). Ces ensembles peuvent, le cas échéant, être représentés et/ou enregistrés sous des formes différentes (tables de données, équations...).

Selon un aspect particulier, le procédé peut comprendre une étape de génération d'un signal d'alerte, si ladite au moins une information représentative d'une dispersion et/ou d'un écart est supérieure à un seuil prédéterminé.

De cette manière l'opérateur est immédiatement averti, notamment si la visseuse n'est pas apte à effectuer le travail avec le niveau de précision attendu.

Dans une mise en œuvre particulière, l'étape d'obtention d'une série de doublets à une fréquence angulaire prédéterminée met en œuvre :

- une mesure et un enregistrement desdits doublets à une fréquence temporelle prédéterminée ;
- un classement desdits doublets dans une table brute suivant un ordre croissant ou décroissant des valeurs d'angle ;
- un calcul de ladite première table, en

  - choisissant les valeurs d'angle sous la forme d'une suite arithmétique ayant un pas angulaire constant ; et
  - en calculant la valeur de couple pour chaque valeur de ladite suite en utilisant une interpolation des valeurs de la table brute.

En exprimant le couple en fonction de l'angle et non en fonction du temps, on s'affranchit de la vitesse de rotation de la visseuse qui peut varier durant le vissage et complexifie l'évaluation des paramètres.

Ladite étape de détermination de ladite deuxième table peut notamment mettre en œuvre au moins une des opérations suivantes :

- régression linéaire appliquée à ladite première table ;
- régression polynomiale appliquée à ladite première table ;
- filtrage passe-bas appliqué à ladite première table, à une fréquence de coupure à la valeur du défaut ayant la fréquence la plus faible.

Ces différents exemples de méthodes de traitement numérique (filtrage) permettent de déterminer efficacement une image de la caractéristique vraie de la vis, en en calculant une caractéristique théorique.

Selon un aspect particulier, le calcul de la troisième table peut comprendre les étapes suivantes :

- soustraction aux valeurs de couple de ladite première table des valeurs de couple correspondantes de la deuxième table ;
- division des valeurs de couple obtenues par les valeurs de couple correspondantes de la deuxième table.

On dispose ainsi d'oscillations normalisées.

Dans un premier mode de réalisation, offrant une précision élevée, ladite étape d'analyse de la troisième table comprend les sous-étapes suivantes :

- application d'une transformée de Fourier discrète sur ladite troisième table, délivrant, pour chaque perturbation d'une série de perturbations, une fréquence et une amplitude ;
- sélection d'au moins une signature vibratoire, représentée par une fréquence et une amplitude et représentative d'une perturbation présente dans ladite troisième table ;
- sélection d'une caractéristique linéaire souhaitée ;
- somme de ladite caractéristique linéaire et d'une sinusoïde ayant pour fréquence, la fréquence de ladite signature et pour amplitude, l'amplitude de ladite signature multipliée par le couple dudit objectif de vissage, délivrant une première relation exprimant un couple en fonction d'un angle ;
- maximisation de ladite première relation, de façon à supprimer les décroissances de couple, donnant une seconde relation exprimant un couple en fonction d'un angle ;
- soustraction à ladite seconde relation de ladite caractéristique linéaire, pour obtenir une troisième relation exprimant un couple en fonction d'un angle ;
- calcul de la dispersion et/ou de l'écart par rapport audit objectif de vissage, induit par chaque signature vibratoire à partir de ladite troisième relation ;
- puis pour l'ensemble des signatures vibratoires sélectionnées :
- calcul de la dispersion globale et/ou de l'écart global par rapport audit objectif de vissage induit par ledit ensemble des signatures vibratoires sélectionnées.

De cette manière, les signatures vibratoires (en fréquence et en amplitude) des perturbations lisibles sur le signal du couple mesuré par le capteur sont mises en évidence en calculant la différence entre le comportement théorique de l'assemblage au cours d'un travail et l'évolution du couple en fonction de l'angle mesuré au cours de ce travail.

La caractéristique linéaire souhaitée peut notamment être, selon les besoins, la caractéristique de la deuxième table ou une autre caractéristique (élastique, franche).

Selon un aspect particulier de ce premier mode de réalisation, la sous-étape de calcul de la dispersion et/ou de l'écart par rapport audit objectif de vissage induit par chaque signature vibratoire comprend au moins une des opérations suivantes :

- détermination d'une moyenne de ladite troisième relation sur un intervalle prédéterminé d'angle de vissage ;
- détermination d'un écart-type, à partir de ladite troisième relation, sur un intervalle prédéterminé d'angle de vissage, représentatif de la dispersion introduite par la perturbation considérée.

On dispose ainsi d'une information efficace sur la dispersion générée par chaque perturbation.

Dans ce premier mode de réalisation, l'étape de calcul de la dispersion globale et/ou de l'écart global peut notamment comprendre les sous-étapes suivantes :

- sommation des moyennes correspondant à chacune des perturbations, délivrant une donnée représentative de l'écart par rapport à l'objectif de vissage induit par l'ensemble des perturbations ;
- agrégation des écarts-types correspondant à chacune des perturbations, délivrant une donnée représentative de la dispersion induite par l'ensemble des perturbations.

On dispose ainsi d'une information efficace sur la dispersion générée par l'ensemble des perturbations.

Dans ce premier mode de réalisation, l'étape d'obtention peut être mise en œuvre sur une plage angulaire de vissage d'au moins 720°.

Ceci peut se faire sur un seul vissage ou, dans un mode de réalisation, en mettant en œuvre une agrégation d'au moins deux premières tables, correspondant à au moins deux vissages, de façon à disposer d'une plage angulaire de vissage d'au moins 720°.

Dans un second mode de réalisation, plus simple mais moins précis que le précédent, l'étape de détermination de la troisième table comprend les sous-étapes suivantes :

- maximisation des données de ladite première table, de façon à supprimer les décroissances de couple, pour fournir une table maximisée ;
- soustraction aux valeurs de couple de ladite table maximisée des valeurs de couple correspondantes de ladite deuxième table, pour fournir une table différentielle ;
- division des valeurs de couple de ladite table différentielle par les valeurs de couple correspondantes de la deuxième table, pour fournir ladite troisième table.

Ce second mode de réalisation permet de s'affranchir de la mise en œuvre d'une FFT, tout en fournissant des résultats qui, bien que moins précis que dans le premier mode de réalisation, sont suffisants pour de nombreuses applications. L'homme du métier pourra donc s'orienter vers l'un ou l'autre des modes de réalisation, en fonction de la précision des résultats souhaitée et de la complexité souhaitée des traitements. Il pourra également imaginer, au vu de ces deux exemples de mise en œuvre, d'autres variantes.

Dans ce second mode de réalisation, l'étape d'analyse peut par exemple comprendre au moins une des sous-étapes suivantes :

- détermination d'une moyenne de ladite troisième table ;
- détermination d'un écart-type de ladite troisième table, représentatif de la dispersion induite par ladite visseuse sur le couple mesuré.

On dispose ainsi d'information efficace sur la dispersion générée.

Dans les différents modes de réalisation, le procédé peut comprendre une étape de génération de résultats d'évaluation d'un niveau de dispersion et/ou d'écart par rapport à un objectif de vissage, pour une perturbation donnée et/ou pour un ensemble de perturbations.

Les résultats délivrés peuvent bien sûr être adaptés, dans leur contenu et leur présentation, notamment fonction des besoins et des applications.

Selon un autre aspect, l'invention concerne une visseuse mettant en œuvre le procédé tel que décrit ci-dessus, comprenant au moins un organe rotatif susceptible de générer des perturbations sur le couple appliqué à une vis. Ladite visseuse comprend des moyens de contrôle d'un niveau de qualité de vissage, par rapport à un objectif de vissage prédéterminé, mis en œuvre durant le vissage d'au moins une vis et comprenant :

- des moyens d'obtention, à une fréquence angulaire prédéterminée, d'une série de doublets représentative de la montée en couple du vissage d'au moins une vis, constituant une première table de valeurs, chaque doublet comprenant une valeur d'angle et une valeur de couple ;
- des moyens de détermination, à partir de ladite première table de valeurs, d'une deuxième table de valeurs présentant le couple en fonction de l'angle et représentative de la caractéristique vraie de l'au moins une vis ;
- des moyens de détermination d'une troisième table de valeurs présentant le couple en fonction de l'angle et représentative des perturbations induites par ladite visseuse lors de la montée en couple du vissage d'au moins une vis, à partir des première et deuxième tables ;
- des moyens d'analyse de la troisième table, délivrant au moins une information représentative d'une dispersion et/ou d'un écart par rapport audit objectif de vissage, résultant de perturbations induites par ladite visseuse ;
- des moyens de génération d'un signal d'alerte, si ladite au moins une information représentative d'une dispersion et/ou d'un écart est supérieure à un seuil prédéterminé.

Selon encore un autre aspect, l'invention concerne également un produit programme d'ordinateur comprenant des instructions de code de programme pour la mise en œuvre du procédé de contrôle selon l'un quelconque des paragraphes ci-dessus, lorsque ledit programme est exécuté par un microprocesseur.

## 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 est une vue en coupe d'outil intégré à un ensemble d'outillage selon l'invention ;
- la figure 2 est un diagramme fonctionnel d'un outillage selon l'invention ;
- la figure 3 présente sur un exemple de schéma les variations de couple de serrage en fonction du nombre de serrages effectués par un même outil ;
- la figure 4 présente un ordinogramme des principales étapes pour la mise en œuvre d'un procédé de contrôle d'un niveau de qualité selon un premier mode de réalisation ;
- la figure 5.1 présente un exemple de caractéristique linéaire d'une raideur donnée, selon le premier mode de réalisation ;
- la figure 5.2 présente un exemple d'une courbe représentative de la première relation, selon le premier mode de réalisation ;
- la figure 5.3 présente un exemple d'une courbe représentative de la seconde relation, selon le premier mode de réalisation ;
- la figure 5.4 présente un exemple d'une courbe représentative de la troisième relation, selon le premier mode de réalisation ;
- la figure 6.1 présente un exemple d'une courbe représentative de la première table, selon un deuxième mode de réalisation ;
- la figure 6.2 présente un exemple d'une courbe représentative de la deuxième table, selon le deuxième mode de réalisation ;
- la figure 6.3 présente un exemple d'une courbe représentative d'une table intermédiaire, illustrant le fait que l'outil s'arrête toujours au niveau d'un maximum, selon le deuxième mode de réalisation ;
- la figure 6.4 présente un exemple d'une courbe représentative de la troisième table, selon le deuxième mode de réalisation.

## 5 DESCRIPTION DETAILLEE DE L'INVENTION

Sur toutes les figures du présent document, les éléments et étapes identiques sont désignés par une même référence.

Le principe général de la technique décrite repose sur le calcul de ce que serait la dispersion d'un outil de vissage, ou visseuse, et son écart moyen par rapport à l'objectif de serrage à partir des perturbations détectées sur le signal produit par son capteur de couple.

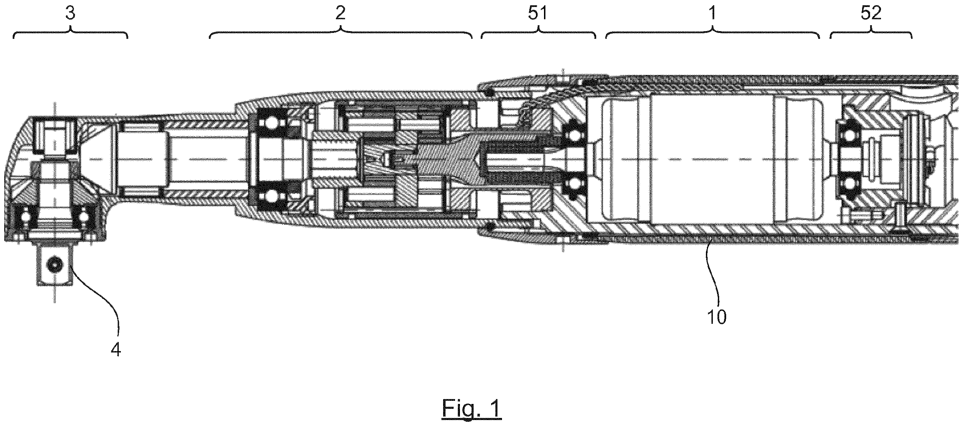

En référence à la **Fig. 1**, un outil de vissage selon le présent mode de réalisation comprend un moteur 1 monté dans le corps 10 de l'outil, la sortie moteur étant couplée à un ensemble d'engrènement, ou réducteur, 2, formé de trains épicycloïdaux, lui-même couplé à un engrènement de renvoi d'angle 3 (l'axe de vissage étant ici perpendiculaire à l'axe moteur; le renvoi d'angle 3 peut être absent dans le cas d'un autre mode de réalisation envisageable selon lequel l'axe de vissage et l'axe moteurs sont coaxiaux) destiné à entraîner en rotation une tête de vissage présentant un embout 4 prévu pour recevoir une douille de vissage.

De façon connue en soi, un capteur de couple 51 (par exemple un pont de jauges de contraintes) délivre des informations relatives au couple de serrage exercé par l'outil. Un capteur d'angle 52 est également prévu, à l'arrière du moteur. Il peut par exemple comprendre un aimant tournant devant un capteur à effet Hall porté par une carte électronique.

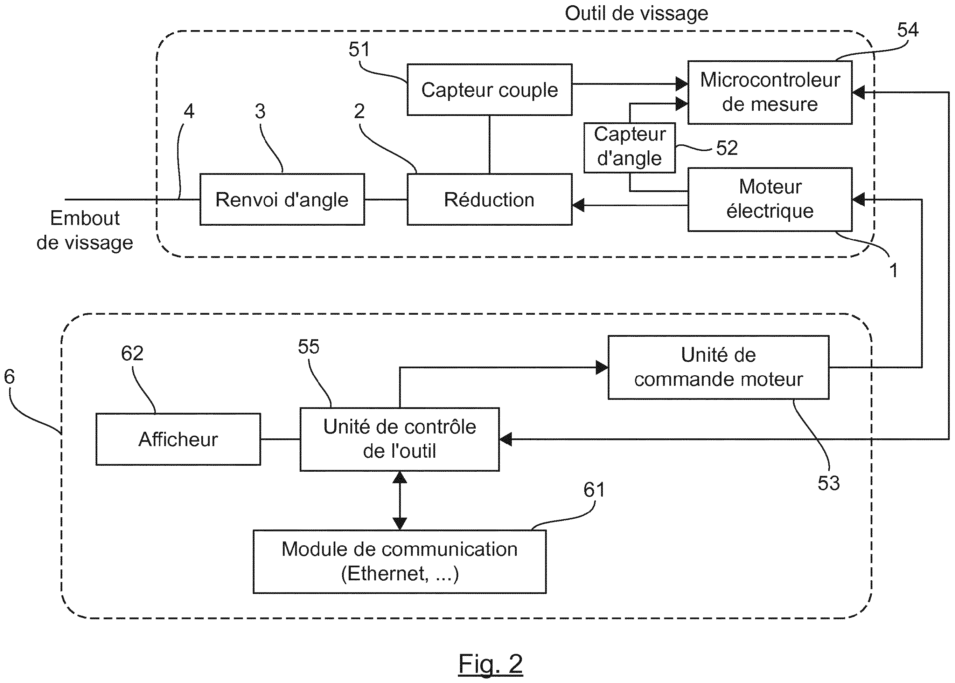

Sur le diagramme fonctionnel de la **Fig.2**, les organes mécaniques sont cette fois représentés sous forme schématique de façon à faire apparaître le moteur 1, le réducteur 2 et le renvoi d'angle 3.

Tel qu'illustré, le capteur de couple 51 est relié à un microcontrôleur de mesure 54 qui transmet les données à une unité de contrôle 55 de l'outil.

En fonction des données fournies par le capteur de couple 51, une unité de contrôle 55 pilote le fonctionnement du moteur 1 par l'intermédiaire d'une unité de commande 53.

L'unité de contrôle 55 intègre en outre des moyens de traitement du signal fourni par le capteur 51 de couple pour délivrer au moins une information représentative d'une dispersion et/ou d'un écart par rapport audit objectif de vissage, résultant de perturbations générées par la visseuse.

Selon le présent mode de réalisation, l'unité de contrôle 55 et l'unité de commande 53 sont intégrées dans une unité 6, désignées par le terme de « contrôleur de vissage » sur la figure 2.

Le contrôleur 6 de vissage peut intégrer en outre :

- un module de communication 61 permettant de relier le contrôleur 6 à un réseau d'échanges d'information, par exemple de type Ethernet ;
- un afficheur 62.

Ainsi, lorsque le contrôleur 6 détecte que des valeurs de dispersion ou d'écart par rapport à la consigne ne répondent plus aux exigences de production, un signal et/ou un message d'alerte est affiché sur l'afficheur 62, et éventuellement envoyé à un poste distant par l'intermédiaire du module de communication.

Dans le cas d'un outil à batterie, les fonctions de contrôle de l'outil 55 et de commande de moteur 53 peuvent être intégrées dans l'outil.

Selon un mode de réalisation, un tel message peut indiquer l'organe défaillant concerné, par exemple par comparaison de la dispersion individuelle par rapport à des valeurs seuils ou un pourcentage de la dispersion, et peut également préciser le type de maintenance et/ou d'entretien à effectuer.

On rappelle que le couple de vissage est déterminé à partir d'une tension transmise par le capteur 5 de couple.

Après avoir détaillé par des exemples les principaux dispositifs pour la mise en œuvre de l'invention, nous allons maintenant expliciter comment ceux-ci coopèrent dans le cadre d'un procédé de contrôle d'un niveau de qualité de vissage d'un outil.

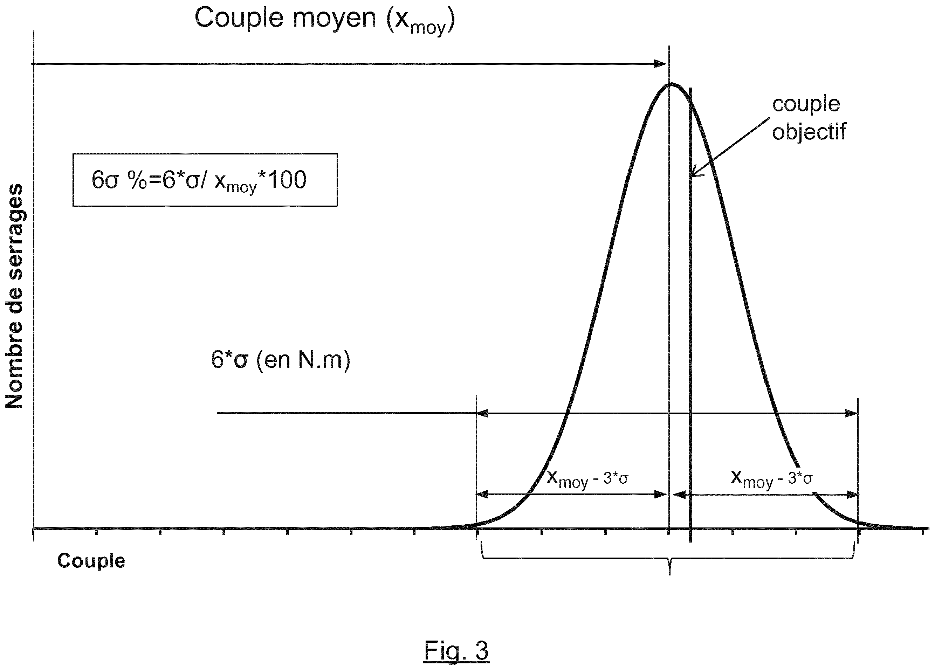

La courbe de la **Fig.3** illustre les variations de couple de serrage en fonction du nombre de serrages mesurés. Cette courbe est élaborée à partir de plusieurs mesures (par exemple de 25 à 100) permettant de réaliser des études statistiques sur le comportement d'un outil. L'exploitation des résultats donne notamment les deux données suivantes :

- la dispersion des serrages de l'outil, caractérisée par un écart-type ($\sigma$), informant sur la capacité de l'outil à reproduire un couple avec précision. La dispersion est en général exprimée comme 6 fois l'écart type divisé par la moyenne en pourcentage ;
- l'écart par rapport à l'objectif, évalué en calculant la différence entre la moyenne et l'objectif, divisée par l'objectif. La calibration préalable de la visseuse par rapport à l'objectif a pour but d'avoir un écart le plus faible possible.

La courbe de mesure a typiquement la forme d'une gaussienne, la quasi-totalité des serrages (99,73 % dans les tests effectuées) se situant dans la zone des $6\sigma$.

Pour estimer correctement la précision de l'outil durant un seul serrage (ou sur un nombre limité de serrages), il est nécessaire que tous les défauts soient présents sur la courbe de couple. Or un défaut qui se présente une fois par tour d'arbre de sortie de visseuse ne va pas forcément apparaitre si la vis requière une rotation de 30° pour être serrée. Un angle minimum de rotation de 720° (au moins deux tours pour analyser les basses fréquences) de l'arbre de sortie est souhaitable (obtenu sur un ou plusieurs vissages).

Les perturbations provoquant des variations de couple d'un vissage à l'autre ont diverses origines telles que l'engrènement des dentures ou encore les perturbations électriques des signaux par le champ magnétique du moteur qui génèrent des écarts entre la mesure de couple et le couple réellement appliqué sur la vis.

Ces perturbations se caractérisent par une oscillation de la mesure du couple de l'outil autour de ce que serait la valeur réellement appliquée à la vis si elle était mesurée en temps réel par un capteur placé entre la vis et la visseuse.

Cette oscillation se produit à des fréquences et amplitudes variables dépendantes de l'origine des perturbations.

Dans le cadre de la présente description, on considère par hypothèse que l'amplitude des perturbations est proportionnelle au couple instantané fourni par la visseuse. Ceci a pour conséquence que les dispersions et écarts sont du même niveau quel que soit le couple de serrage.

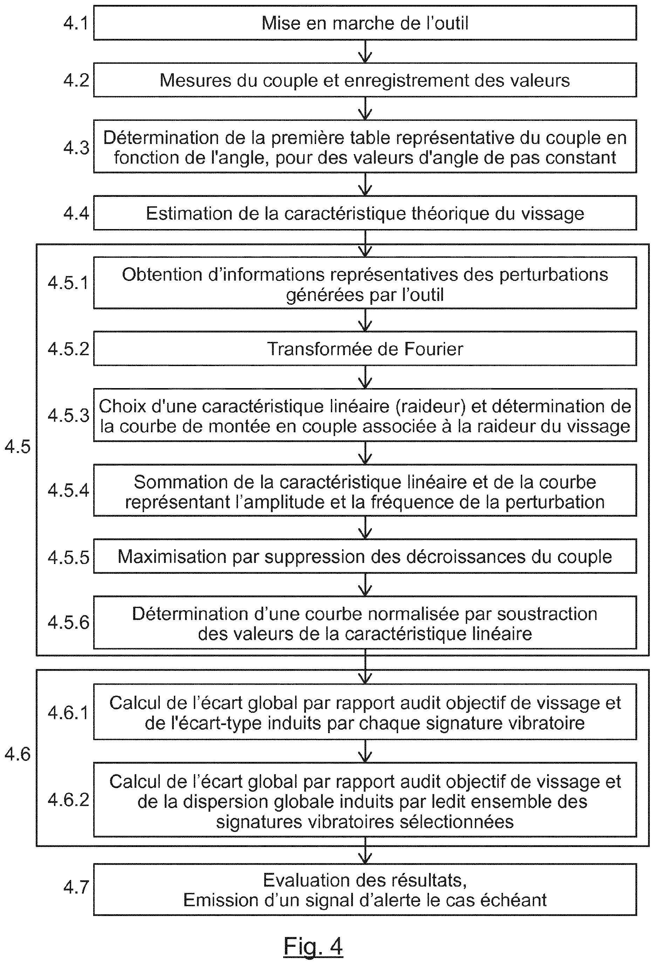

Selon les résultats d'estimation, le procédé, objet de l'invention, comporte une étape d'émission d'un signal d'alerte lorsque le contrôleur 6 détecte que la dispersion ou l'écart par rapport à la consigne des serrages ne répond plus aux exigences de production. Cette alerte répond à des contraintes de qualité, mais également de sécurité. Une alerte peut également être générée lors de la détection d'une amplitude de perturbation anormale d'un composant, en vue par exemple d'effectuer un diagnostic. Ceci peut notamment être restitué sous la forme d'un tableau présentant les dispersions et les écarts pour chaque perturbation, tel qu'expliqué plus en détail par la suite, en relation avec l'étape 4.7 du procédé de la figure 4.

Il est également possible, lors d'un test de maintenance, d'estimer la dispersion et l'écart à la consigne des serrages de la visseuse pour des raideurs usuelles de test, permettant ainsi un contrôle rapide de l'outil.

On peut noter que cette estimation ne prend pas en compte certains effets de la visseuse telle que l'insuffisance de freinage du moteur au moment de l'atteinte de l'objectif de serrage. Il est en effet peu aisé, et peu utile, de déterminer ce qui se passe après l'arrêt du moteur.

Un des aspects de l'invention consiste à calculer ce que serait la dispersion d'un outil de vissage et son écart moyen par rapport à l'objectif de serrage à partir des perturbations détectées sur le signal produit par son capteur 51 de couple. Cette évaluation peut être réalisée au cours d'un seul serrage effectué sur une chaîne de fabrication par exemple. Cette évaluation est donc beaucoup plus rapide que celle consistant à réaliser un diagnostic nécessitant généralement plusieurs dizaines de serrages sur un banc de test.

### 5.1 Premier-mode de réalisation de l'invention.

En relation avec la **Fig.4,** un premier mode de réalisation va maintenant être décrit. La **Fig.** 4 présente un ordinogramme des principales étapes pour la mise en œuvre d'un procédé de contrôle d'un niveau de qualité de vissage d'une visseuse, par rapport à un objectif de vissage prédéterminé, selon un premier exemple de réalisation.

A l'étape 4.1, l'outil, une visseuse par exemple, est mis en marche et effectue un travail selon une recette de vissage par exemple. Au cours du travail, les capteurs mesurent la valeur du couple (capteur 51) et l'angle (capteur 52) en référençant ces mesures par rapport au temps. Les mesures sont prises toutes les millisecondes par exemple (étape 4.2). Les valeurs des capteurs 51 et 52 sont transmises au contrôleur 6.

Le contrôleur 6 enregistre dans sa mémoire les valeurs de mesures et les traite dans le but de produire une table de doublets de valeurs de couple et d'angle en fonction du temps, par exemple à des intervalles de temps prédéterminés. Cette table est appelée « table brute».

A l'étape 4.3, Le contrôleur détermine une table représentative du couple en fonction de l'angle de vissage, pour des valeurs d'angle de pas constant, pour élaborer une première table de doublets représentative de la montée en couple du vissage d'au moins une vis, chaque doublet comprenant une valeur d'angle et une valeur de couple. Cette étape consiste à :

- déterminer (I) un pas angulaire, qui peut être choisi de façon arbitraire, et par exemple correspondre à un pas moyen se situant entre deux valeurs. Il correspond dans ce dernier cas à l'écart entre l'angle final et l'angle initial, divisé par le nombre de points entre les deux :

$$\Delta\theta = \frac{\theta_n - \theta_0}{n}$$

Ainsi, chaque nouvel angle se calcule de la manière suivante :

$$\theta'_i = i \times \Delta\theta \ ;$$

- Calculer (II) les échantillons de couple pour chaque nouvel angle défini. Pour effectuer ce deuxième calcul (II). Selon une première approche, ce calcul peut mettre en œuvre une interpolation linéaire entre 2 valeurs de couple de la première série :

$$C'_i = C_i + \frac{(C_{i+1} - C_i) \times (\theta'_i - \theta_i)}{\theta_{i+1} - \theta_i}$$

D'autres approches, notamment par interpolation polynomiale de la première série de mesures, sont également utilisables.

A l'issue de l'étape 4.3, le contrôleur 6 établit une série de valeurs S1 qui représente la valeur du couple en fonction du pas angulaire (chaque valeur de couple étant calculés pour des pas angulaires constants).

On obtient ainsi la première table, représentative de la relation :

$$C_{capteur} = f(\alpha)$$

obtenue à partir des doublets représentative de la montée en couple du vissage d'au moins une vis, enregistrés dans la première table. Cette première table permet de s'affranchir de la vitesse de rotation de l'outil qui peut varier durant le vissage.

A l'étape 4.4, la caractéristique théorique de l'assemblage est estimée. Cette étape permet de déterminer une image de la caractéristique vraie de la vis en calculant une caractéristique théorique.

Plusieurs méthodes de traitement numérique (filtrage) sont possibles, tels que :

- régression linéaire appliquée à la table de couples en fonction de l'angle.
- régression polynomiale appliquée à la table de couple en fonction de l'angle.
- filtre passe-bas ayant comme fréquence de coupure la valeur du défaut ayant la fréquence la plus faible. Cette méthode permet que la partie utile des perturbations soit conservée en supprimant notamment les éventuels défauts de la vis, qui peut ne pas être linéaire.

A l'issue de cette étape, le contrôleur 6 met à jour une deuxième table contenant une série de valeurs S2 représentative de la caractéristique vraie de la vis en fonction du pas angulaire (à pas d'angle constant), cette série de valeur peut s'exprimer par la formule :

$$C_{\text{caractéristique vraie}} = g(\alpha)$$

A l'étape 4.5, la part du signal résultant des perturbations générées par l'outil peut être à ce moment isolée et quantifiée. Selon un mode de réalisation, cette étape se décompose en plusieurs sous-étapes :

1°] L'étape 4.5.1 consiste à ne retenir de la première table que les informations représentatives des perturbations générées par l'outil.

Pour le même angle, les valeurs de couple de ladite seconde table sont soustraites aux valeurs de couple correspondantes de la première table. Le résultat de ces soustractions est divisé par les valeurs de couple correspondantes de la seconde table, ceci exprimé en pourcent.

$$\Delta C\% = (f(\alpha) - g(\alpha))/g(\alpha)$$

On détermine ainsi les valeurs de la troisième table.

Dans un deuxième temps, à l'étape 4.5.2, la transformée de Fourrier discrète est calculée sur cette table afin de réaliser une analyse fréquentielle du signal et mettre en évidence les différentes perturbations qui apparaissent sous forme d'une raie caractérisée par une certaine fréquence. Le tableau ci-dessous présente sous la forme d'un exemple des valeurs représentatives de la fréquence et de l'amplitude de chaque perturbation détectée.

| Perturbation | Fréquence | Amplitude |
|--------------|-----------|-----------|
| 1 | f1 | A1 |
| 2 | f2 | A2 |
| ------ | ------ | ------ |
| n | fn | An |

n varie par exemple de 1 à 1000.

On peut noter que selon ce mode de calcul, les erreurs sont considérées comme indépendantes du couple, ou influe peu sur sa valeur.

2°] A la sous-étape 4.5.3, une caractéristique linéaire ayant une raideur déterminée est choisie. Cette raideur est un paramètre d'entrée défini de façon normative, par exemple : angle franc (30°) - angle élastique (360°), ou entre les deux (notamment, cette caractéristique peut être la caractéristique vraie de l'assemblage réel, définie par la deuxième table).

L'angle de serrage à simuler $\alpha_{\text{vis}}$ est sélectionné.

La dispersion est évaluée pour chaque fréquence fi présente dans le tableau ci-dessus. La table de montée du couple en fonction de l'angle associée à cette raideur s'exprime de la façon suivante :

$$T_R(\alpha) = \frac{\alpha}{\alpha_{\text{vis}}} \cdot C_{\text{consigne}}$$

où :

$T_R$ est le couple de la caractéristique linéaire,
$\alpha_{\text{vis}}$ est l'angle total du vissage (de 0% à 100% du couple, en degré),
$C_{\text{consigne}}$ est le couple consigne (en Nm).

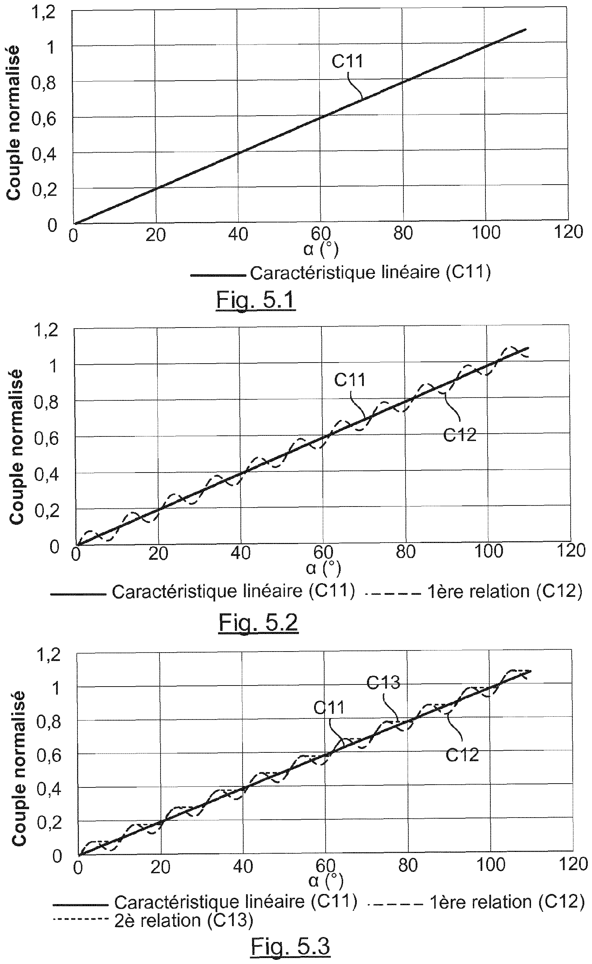

Dans ce mode de réalisation, le couple réel est considéré comme parfait, c'est-à-dire que le couple augmente proportionnellement avec l'angle (Fig. 5.1). La courbe C11 illustrant cette caractéristique linéaire est un segment de droite dont la pente est fonction de l'angle de serrage.

3°] Lors de la sous-étape 4.5.4, le contrôleur 6 détermine une première relation mathématique $T_c$ obtenue par la somme de la courbe C11 (la caractéristique linéaire) et de la courbe sinusoïdale dont l'amplitude et la fréquence sont celles de la perturbation considérée. Le calcul de cette relation d'ajout de la sinusoïde est mise en œuvre pour chaque perturbation. Ceci exprime une première relation :

$$T_c(\alpha) = T_R(\alpha) + C_{consigne}.A.\sin(2.\pi.f.\alpha)$$

où :

- $T_c$ est le couple mesuré par le capteur 5 (en Nm),
- A est l'amplitude relative du défaut par rapport au couple consigne $C_{consigne}$, issue de la FFT (%),
- f est la fréquence de la perturbation (deg-1).

Un exemple de courbe C12 produite par cette première relation mathématique est présenté à la **Fig. 5.2.**

4°] A la sous-étape 4.5.5, le contrôleur 6 détermine une seconde relation mathématique, qui exprime le fait que l'arrêt de l'outil ne prend pas en compte les décroissances de couple. Cette seconde relation $T_s$ découle de la première relation et s'exprime de la façon suivante :

$$T_S(\alpha) = \max_{0 \leq x \leq \alpha} T_c(x)$$

Les valeurs de couple sont maximisées de façon à supprimer les décroissances, produisant ainsi une deuxième relation exprimant un couple en fonction d'un angle. En d'autres termes, $T_S$ est une représentation fictive d'un couple qui va s'en cesse croissant, c'est à dire pour lequel l'arrêt de l'outil ne peut être activé sur une valeur de couple inférieur à une valeur précédemment atteinte lors du travail. Selon cette représentation fictive, l'arrêt de l'outil n'intervient pas lors d'une diminution du couple, mais lors de l'atteinte d'une valeur « maximum ».

Un exemple de courbe C13 illustrant cette deuxième relation mathématique est présenté à la **Fig. 5.3.**

5°] Lors de la sous-étape 4.5.6, le contrôleur 6 déduit de cette deuxième relation une troisième relation qui correspond à une soustraction, aux valeurs obtenues à l'aide de la deuxième relation, et des valeurs correspondantes de la caractéristique linéaire. Cette troisième relation s'exprime mathématiquement de la façon suivante :

$$T_S(\alpha) - T_R(\alpha)$$

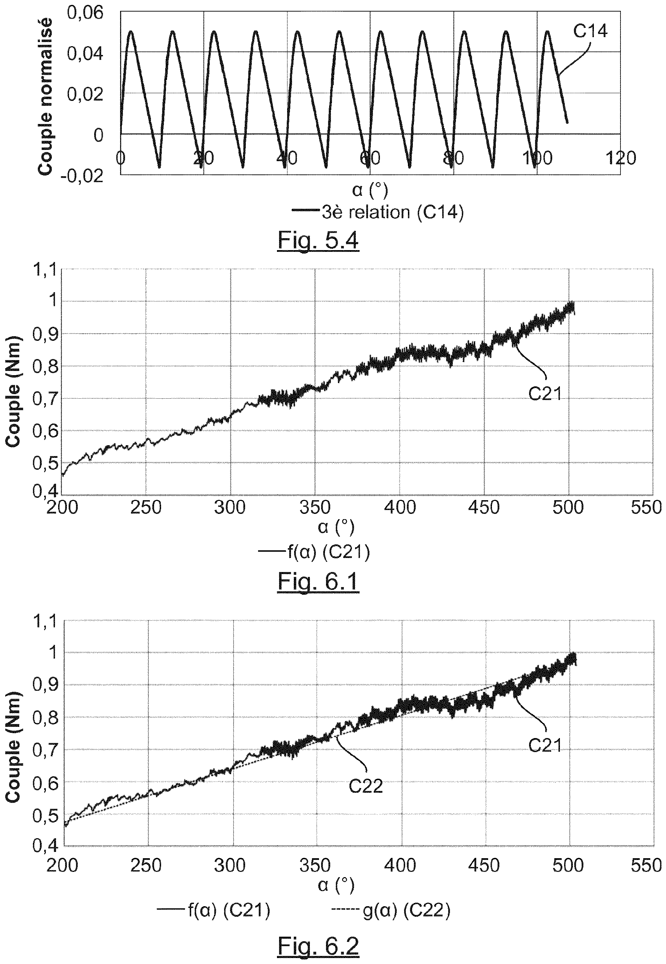

La table ainsi obtenue est illustrée par la courbe C14 de la **Fig. 5.4.**

Ainsi, à l'issue des cinq étapes 4.5.1 à 4.5.6, qui sont décrites ci-dessous selon un exemple de réalisation, le contrôleur 6 peut déterminer la dispersion et/ou l'écart par rapport à l'objectif résultant de chaque perturbation générée par l'outil (étape 4.6).

Dans un premier temps, à l'étape 4.6.1, le contrôleur 6 évalue l'influence individuelle des perturbations sur la dispersion et/ou l'écart de vissage par rapport à l'objectif.

Selon un cas particulier, lorsque l'on sélectionne la caractéristique linéaire à l'étape 4.5.3, le calcul de la dispersion et de l'écart par rapport à l'objectif s'effectue en considérant une raideur d'assemblage qui peut être choisie indépendamment de la raideur de l'assemblage sur lequel ont été recueillies les valeurs de la première série. Selon une variante de réalisation, plusieurs calculs de dispersions et d'écarts sont effectués en utilisant plusieurs raideurs, par exemple les raideurs normalisées utilisées pour définir un assemblage franc et un assemblage élastique ou une raideur propre à l'application.

Au cours du calcul de la dispersion et l'écart par rapport à l'objectif, les perturbations engendrées par l'outil sont considérées une par une de façon à évaluer pour chaque perturbation, sa contribution à la perturbation globale.

Selon un mode de réalisation, l'évaluation de l'influence individuelle des perturbations sur la dispersion et de l'écart de vissage par rapport à l'objectif s'effectue à l'issue des étapes suivantes :

- calcul de la moyenne de cette différence sur une période. Cette moyenne est représentative de l'écart entre le couple généré par l'outil et l'objectif de couple de serrage. Elle est exprimée de la façon suivante :

$$\overline{x} = C_{consigne} - f \int_0^{\frac{1}{f}} (T_S(\alpha) - T_R(\alpha)) d\alpha$$

- calcul de l'écart-type de cette troisième relation. Cet écart-type est représentatif de la dispersion introduite par la raie sur le couple généré par l'outil. Elle est exprimée de la façon suivante :

$$\sigma = \frac{1}{\overline{\overline{x}}} \times \sqrt{\int_0^{\frac{1}{f}} \left(T_S(\alpha) - (T_R(\alpha) - C_{consigne} + \overline{x})\right)^2 d\alpha}$$

Ces calculs sont répétés pour chaque valeur de n (la plupart sont proches de 0, et non significatives. Les valeurs plus élevées correspondent à des défauts éventuels. Connaissant les fréquences caractéristiques de chaque élément de l'outil, il est possible de déterminer le ou les éléments défaillants).

Dans un second temps, à l'étape 4.6.2, le contrôleur 6 évalue l'influence de l'ensemble des perturbations sur la dispersion et l'écart de vissage par rapport à l'objectif, ceci pour la ou les raideurs d'assemblage précédemment choisies.

Selon un exemple de réalisation, le calcul s'effectue en réalisant les calculs suivants :
- Les moyennes sont additionnées, et la valeur ainsi calculée est représentative de l'écart entre le couple généré par l'outil et l'objectif de couple de serrage pour l'ensemble des raies et donc des perturbations induites par l'outil. Elle est exprimée de la façon suivante :

$$x_{moy} \geq C_{consigne} - \sum_{i=1}^{n} \left(\overline{x}_i - C_{consigne}\right)$$

Avec i variant de 1 à n, i représentant chacune des perturbations.
- les écart-types sont agrégés pour donner une valeur représentative de la dispersion induite par l'ensemble des raies. Elle est exprimée de la façon suivante (formule 1) :

$$6\sigma \leq \sqrt{\sum_{i=1}^{n} (6\sigma_i)^2}$$

En effet :
$$\sigma_{X+Y} = \sqrt{\sigma_X^2 + \sigma_Y^2 + 2\sigma_X\sigma_Y\rho(X,Y)}$$

Or: $-1 \leq \rho(X, Y) \leq 1$

Donc : $\sigma_X^2 + \sigma_Y^2 + 2\sigma_X\sigma_Y\rho(X,Y) \leq \sigma_X^2 + \sigma_Y^2 + 2\sigma_X\sigma_Y$

Sachant que : $\sigma_X^2 + \sigma_Y^2 + 2\sigma_X\sigma_Y = (\sigma_X + \sigma_Y)^2$

on obtient :
$$\sigma_{X+Y} \leq \sqrt{\sigma_X^2 + \sigma_Y^2}$$

Ce calcul (formule 1) permet donc de vérifier la présence d'une majoration de la dispersion par la somme du carré des dispersions calculées pour chaque défaut.

Selon un mode particulier de réalisation et par sécurité, la valeur obtenue est majorée par rapport à la valeur réelle.

A l'étape 4.7, des tests sont effectués afin de déterminer si la dispersion et l'écart se situent dans une fourchette acceptable et dans le cas contraire, une alerte est émise. Les résultats peuvent être délivrés dans un tableau du type :

| Angle | Dispersion | | Ecart | |
|---|---|---|---|---|
| | Evaluation | Seuil | Evaluation | Seuil |
| 30° | $\sigma_{30}$ | | $\bar{x}_{30}$ | |
| 360° | $\sigma_{360}$ | | $\bar{x}_{360}$ | |
| Angle spécial | $\sigma_{spécial}$ | | $\bar{x}_{spécial}$ | |

A l'aide d'un tel tableau, il est possible d'extraire la dispersion et l'écart pour un angle donné (cas d'un diagnostic, pour une application souhaitée du client, on analyse pour un angle donné. Ceci permet de repérer un éventuel composant défaillant).

Le tableau ci-dessous présente les dispersions et les écarts pour chaque perturbation :

| Perturbation | Dispersion | | Ecart | |
|---|---|---|---|---|
| | Evaluation | Seuil | Evaluation | Seuil |
| 1 | $\sigma_1$ | | $\bar{x}_1$ | |
| 2 | $\sigma_2$ | | $\bar{x}_2$ | |
| ------ | ------ | | ------ | |
| n | $\sigma_n$ | | $\bar{x}_n$ | |

Ce tableau permet l'identification des composants générant une imprécision anormale, chacune des perturbations 1 à n étant associée à l'un de ces composants.

L'exemple de réalisation du procédé de contrôle d'un niveau de qualité du travail d'un outil qui vient d'être décrit dans les pages précédentes est considéré comme le plus précis.

Un autre mode de réalisation va maintenant être décrit sous la forme d'un autre exemple. Ce mode décrit une méthode plus simple mais sensiblement moins précise.

5.2 Autre mode de réalisation de l'invention.

Cet autre mode de réalisation n'intègre pas de calcul de FFT et de ce fait n'impose pas de conditions particulières sur l'enregistrement de la table de couple.

Dans un premier temps et de manière identique au premier mode de réalisation, la table de couple exprimée en fonction de l'angle est calculée et enregistrée. Il résulte de cette étape une série de valeurs, formant la première table, et exprimant :

$$C_{capteur} = f(\alpha)$$

La figure 6.1 illustre un exemple de courbe C21 représentant cette première table.

Dans un deuxième temps et de manière identique au premier mode de réalisation, le contrôleur 6 détermine la caractéristique théorique de la vis, image de la caractéristique vraie. Il résulte de cette étape une série de valeurs, formant la deuxième table, et exprimant :

$$C_{caractéristique\ vraie} = g(\alpha)$$

La figure 6.2 illustre un exemple de courbe C22 représentant cette deuxième table, superposée à la courbe C21.

Dans un troisième temps et de manière différente du premier mode de réalisation, le contrôleur 6 isole la part du signal résultant des perturbations générées par l'outil. Ce troisième temps se décompose en plusieurs étapes :

I] détermination à partir de la table de couple transmise par l'outil en fonction de l'angle, d'une première relation qui exprime le fait que l'arrêt de l'outil ne prend pas en compte les décroissances de couple. La table ainsi déterminée s'exprime de la façon suivante :

$$h(\alpha) = \max_{0 \leq x \leq \alpha} f(x)$$

Avec $h(\alpha)$ le couple (Nm) calculé par le contrôleur 6 qui traduit qu'un arrêt de l'outil ne peut être activé sur une valeur de couple inférieur à une valeur précédemment atteinte lors du serrage. Comme pour la méthode précédente, l'outil s'arrête toujours au niveau d'un maximum.

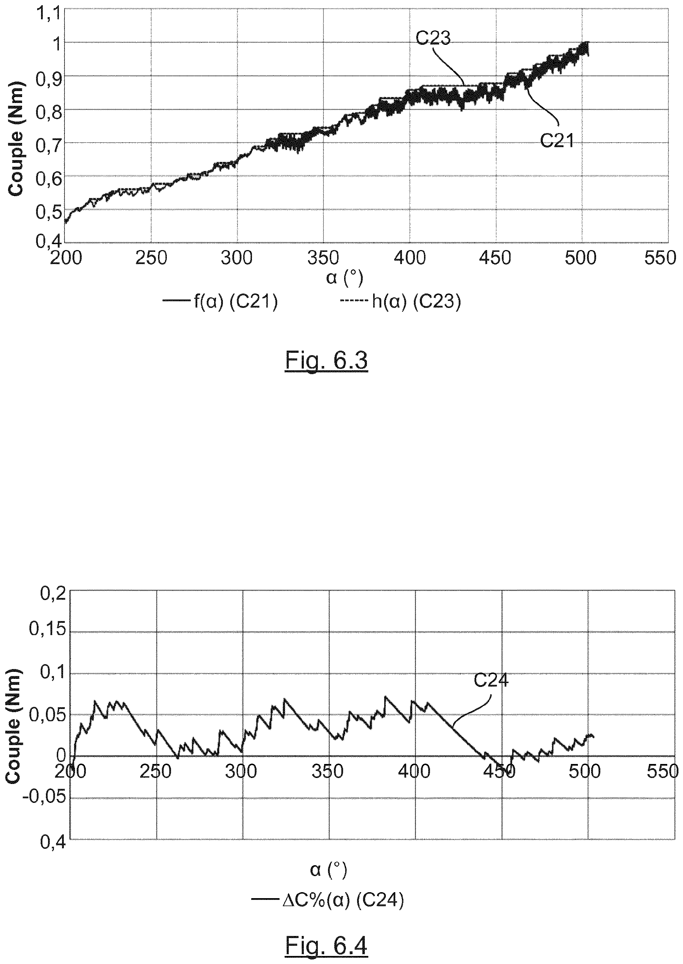

La figure 6.3 illustre un exemple de courbe C23 représentant cette table, superposée à la courbe C21.

II] détermination d'une deuxième relation qui exprime les différences entre la première relation et la caractéristique théorique. En d'autres termes, cette deuxième relation fournit en fonction de l'angle la différence entre la table de couple calculée à l'étape précédente et la caractéristique théorique de la vis (deuxième table, S2). Il en résulte une série de valeurs traduisant :

$$\Delta C = h(\alpha) - g(\alpha)$$

III] Détermination d'une troisième relation obtenue en normalisant la deuxième relation par rapport à la caractéristique théorique, cette étape consiste à faire le rapport entre la différence et la caractéristique théorique de la vis. Il en résulte une série de valeurs, constituant la troisième table et traduisant :

$$\Delta C\%(\alpha) = (h(\alpha) - g(\alpha))/g(\alpha)$$

La figure 6.4 illustre un exemple de courbe C24 représentant cette troisième table.

Dans un quatrième temps, la dispersion et l'écart par rapport à l'objectif résultant de ladite part du signal qui résulte lui-même des perturbations générées par l'outil sont calculés. Cette étape permet de calculer la dispersion et l'écart par rapport à l'objectif de serrage qui sont induits par l'ensemble des perturbations.

La moyenne de cette différence sur la globalité du signal est d'abord calculée. Cette moyenne est représentative de l'écart entre le couple généré par l'outil et l'objectif de couple de serrage. Elle peut s'exprimer par l'équation suivante :

$$\bar{x} = C_{consigne} - \frac{1}{n} \sum_{y=1}^{n} \Delta C\%(y)$$

L'écart-type de cette troisième relation est ensuite calculé. Cet écart-type est représentatif de la dispersion introduite sur le couple mesuré par l'outil. Il peut s'exprimer par l'équation suivante :

$$\sigma = \frac{1}{\bar{x}} \times \sqrt{\frac{1}{n} \sum_{y=1}^{n} \left( \Delta C\%(y) - C_{consigne} + \bar{x} \right)^2}$$

où n représente ici tous les points de la mesure effectués pendant le travail de l'outil.

A la différence du premier mode de réalisation dans lequel n'est prise en compte qu'une seule période car elles sont toutes considérées identiques, le second mode de réalisation prend en compte chaque oscillation. Cette seconde méthode présente l'avantage de prendre en considération les disparités éventuelles entre les oscillations.

Dans un cinquième temps et de manière analogue au premier mode de réalisation, les résultats d'évaluation et une alerte éventuelle est/sont émise(s).

Ce second mode de réalisation est cependant sensiblement moins précis car il ne permet pas de réaliser des résultats pour chaque fréquence de perturbation, et donc de tester chaque composant individuellement.

La présente invention permet ainsi notamment de déterminer si un outil est capable ou non de réaliser le travail qui lui est demandé, en temps réel et sur la chaîne de travail. L'invention peut également être utilisée pour déterminer à la vue des résultats de mesure, si le travail, un vissage par exemple, a été correctement réalisé ou non. Les valeurs caractérisant les perturbations détectées et calculées lors d'un travail avec la pièce produite, il est possible de réaliser un contrôle qualité *a posteriori* des pièces produites et ainsi remettre en cause la qualité de certaines pièces s'il s'avère que l'amplitude des perturbations étaient trop importantes.

Le procédé de l'invention permet notamment de fournir, selon les besoins et les applications, au moins un des éléments suivants :

- une alerte si la dispersion ou l'écart à la consigne des serrages ne répond plus aux exigences de production, ceci éventuellement lors de l'usage de la visseuse en production (aspect qualité / sécurité) ;
- une estimation de la dispersion et un écart à la consigne des serrages de la visseuse pour les raideurs usuelles de test, ceci éventuellement lors d'un test de maintenance (aspect contrôle rapide) ;
- la détection d'une amplitude de perturbation anormale d'un composant et la génération d'une alerte (aspect diagnostic).

L'invention permet ainsi, en particulier :

- de prévenir en temps réel l'utilisateur d'une l'incapacité de la visseuse à réaliser correctement le travail par exemple lors de l'utilisation de l'outil sur chaine d'assemblage ;
- de fournir rapidement, en temps réel, une estimation de la dispersion et l'écart par rapport à un objectif de serrage ;
- de générer une alerte si un composant de la visseuse se dégrade de façon anormale, notamment pour permettre à l'assembleur de l'outil ou au technicien de maintenance d'identifier le ou les composants défaillants.

Bien que décrits à travers un certain nombre d'exemples de réalisation détaillés, le procédé proposé et les dispositifs correspondants comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains dispositifs décrits ci-dessus n'incorporent pas la totalité des modules et fonctions prévus pour les modes de réalisation décrits.

**Revendications**

1. Procédé de contrôle d'un niveau de qualité de vissage d'une visseuse par rapport à un objectif de vissage prédéterminé, mis en œuvre durant le vissage d'au moins un assemblage et comprenant les étapes suivantes :

    - obtention (4.3), à une fréquence angulaire prédéterminée, d'une série de doublets représentative de la montée en couple du vissage d'au moins une vis, constituant une première table de valeurs, chaque doublet comprenant une valeur d'angle et une valeur de couple ;
    - détermination (4.4), à partir de ladite première table de valeurs, d'une deuxième table de valeurs présentant le couple en fonction de l'angle, et représentative de la caractéristique vraie de l'au moins une vis ;
    - détermination (4.5.1) d'une troisième table de valeurs présentant le couple en fonction de l'angle et représentative des perturbations induites par ladite visseuse lors de la montée en couple du vissage d'au moins une vis, à partir des première et deuxième tables ;
    - analyse de la troisième table (4.5.2, 4.5.3, 4.5.4, 4.5.5, 4.5.6, 4.6), délivrant au moins une information représentative d'une dispersion et/ou d'un écart par rapport audit objectif de vissage, résultant de perturbations induites par ladite visseuse.

2. Procédé de contrôle selon la revendication 1, **caractérisé en ce qu'**il comprend une étape de génération (4.7) d'un signal d'alerte, si ladite au moins une information représentative d'une dispersion et/ou d'un écart est supérieure à un seuil prédéterminé.

3. Procédé de contrôle selon la revendication 1 ou 2, **caractérisé en ce que** ladite étape d'obtention (4.3), à une fréquence angulaire prédéterminée, d'une série de doublets met en œuvre :

    - une mesure (4.2) et un enregistrement desdits doublets à une fréquence temporelle prédéterminée ;
    - un classement desdits doublets dans une table brute suivant un ordre croissant ou décroissant des valeurs d'angle ;
    - un calcul de ladite première table, en :

        - choisissant les valeurs d'angle sous la forme d'une suite arithmétique ayant un pas angulaire constant ; et
        - calculant la valeur de couple pour chaque valeur de ladite suite en utilisant une interpolation des valeurs de la table brute.

**4.** Procédé de contrôle selon la revendication 3, **caractérisé en ce que** ladite étape de détermination (4.4) de ladite deuxième table met en œuvre au moins une des opérations suivantes :

- régression linéaire appliquée à ladite première table ;
- régression polynomiale appliquée à ladite première table ;
- filtrage passe-bas appliqué à ladite première table, à une fréquence de coupure à la valeur du défaut ayant la fréquence la plus faible.

**5.** Procédé de contrôle selon la revendication 4, **caractérisé en ce que** ledit calcul de la troisième table comprend les étapes suivantes :

- soustraction (4.5.1) aux valeurs de couple de ladite première table des valeurs de couple correspondantes de la deuxième table ;
- division (4.5.1) des valeurs de couple obtenues par les valeurs de couple correspondantes de la deuxième table.

**6.** Procédé de contrôle selon l'une quelconque des revendications 1 à 5, **caractérisé en ce que** ladite étape d'analyse de la troisième table comprend les sous-étapes suivantes :

- application (4.5.2) d'une transformée de Fourier discrète sur ladite troisième table, délivrant, pour chaque perturbation d'une série de perturbations, une fréquence et une amplitude ;
- sélection d'au moins une signature vibratoire, représentée par une fréquence et une amplitude et représentative d'une perturbation présente dans ladite troisième table ;
- sélection d'une caractéristique linéaire souhaitée;
- somme (4.5.4) de ladite caractéristique linéaire et d'une sinusoïde ayant pour fréquence, la fréquence de ladite signature et pour amplitude, l'amplitude de ladite signature multipliée par le couple dudit objectif de vissage, délivrant une première relation exprimant un couple en fonction d'un angle ;
- maximisation (4.5.5) de ladite première relation, de façon à supprimer les décroissances de couple, donnant une seconde relation exprimant un couple en fonction d'un angle ;
- soustraction (4.5.6) à ladite seconde relation de ladite caractéristique linéaire, pour obtenir une troisième relation exprimant un couple en fonction d'un angle ;
- calcul (4.6) de la dispersion et/ou de l'écart par rapport audit objectif de vissage, induit par chaque signature vibratoire à partir de ladite troisième relation ;
- puis pour l'ensemble des signatures vibratoires sélectionnées
- calcul de la dispersion globale et/ou de l'écart global par rapport audit objectif de vissage induit par ledit ensemble des signatures vibratoires sélectionnées.

**7.** Procédé de contrôle selon la revendication 6, **caractérisé en ce que** ladite sous-étape de calcul de la dispersion et/ou de l'écart par rapport audit objectif de vissage induit par chaque signature vibratoire comprend au moins une des opérations suivantes :

- détermination (4.6.1) d'une moyenne de ladite troisième relation sur un intervalle prédéterminé d'angle de vissage ;
- détermination (4.6.1) d'un écart-type, à partir de ladite troisième relation, sur un intervalle prédéterminé d'angle de vissage, représentatif de la dispersion introduite par la perturbation considérée.

**8.** Procédé de contrôle selon la revendication 6, **caractérisé en ce que** ladite étape de calcul de la dispersion globale et/ou de l'écart global comprend les sous-étapes suivantes :

- sommation (4.6.2) des moyennes correspondant à chacune des perturbations, délivrant une donnée représentative de l'écart par rapport à l'objectif de vissage induit par l'ensemble des perturbations ;
- agrégation (4.6.2) des écarts-types correspondant à chacune des perturbations, délivrant une donnée représentative de la dispersion induite par l'ensemble des perturbations.

**9.** Procédé de contrôle selon l'une quelconque des revendications 1 à 8, **caractérisé en ce que** ladite étape d'obtention (4.3) est mise en œuvre sur une plage angulaire de vissage d'au moins 720°.

**10.** Procédé de contrôle selon la revendication 9, **caractérisé en ce que** ladite étape d'obtention (4.3) met en œuvre une agrégation d'au moins deux premières tables, correspondant à au moins deux vissages, de façon à disposer d'une plage angulaire de vissage d'au moins 720°.

**11.** Procédé de contrôle selon l'une quelconque des revendications 1 à 4, **caractérisé en ce que** ladite étape de détermination (4.5.1) de ladite troisième table comprend les sous-étapes suivantes :

- maximisation des données de ladite première table, de façon à supprimer les décroissances de couple, pour fournir une table maximisée ;
- soustraction aux valeurs de couple de ladite table maximisée des valeurs de couple correspondantes de ladite deuxième table, pour fournir une table différentielle ;
- division des valeurs de couple de ladite table différentielle par les valeurs de couple correspondantes de la deuxième table, pour fournir ladite troisième table.

**12.** Procédé de contrôle selon la revendication 11, **caractérisé en ce que** ladite étape d'analyse comprend au moins une des sous-étapes suivantes :

- détermination (4.6.1) d'une moyenne de ladite troisième table ;
- détermination (4.6.1) d'un écart-type de ladite troisième table, représentatif de la dispersion induite par ladite visseuse sur le couple mesuré.

**13.** Procédé de contrôle selon l'une quelconque des revendications 1 à 12, **caractérisé en ce qu'**il comprend une étape de génération de résultats d'évaluation d'un niveau de dispersion et/ou d'écart par rapport à un objectif de vissage, pour une perturbation donnée et/ou pour un ensemble de perturbations.

**14.** Visseuse mettant en œuvre le procédé selon l'une quelconque des revendications 1 à 13, comprenant au moins un organe rotatif susceptible de générer des perturbations sur le couple appliqué à une vis,
**caractérisée en ce qu'**elle comprend des moyens de contrôle (52) d'un niveau de qualité de vissage, par rapport à un objectif de vissage prédéterminé, mis en œuvre durant le vissage d'au moins une vis et comprenant :

- des moyens d'obtention, à une fréquence angulaire prédéterminée, d'une série de doublets représentative de la montée en couple du vissage d'au moins une vis, constituant une première table de valeurs, chaque doublet comprenant une valeur d'angle et une valeur de couple ;
- des moyens de détermination, à partir de ladite première table de valeurs, d'une deuxième table de valeurs présentant le couple en fonction de l'angle et représentative de la caractéristique vraie de l'au moins une vis ;
- des moyens de détermination d'une troisième table de valeurs présentant le couple en fonction de l'angle et représentative des perturbations induites par ladite visseuse lors de la montée en couple du vissage d'au moins une vis, à partir des première et deuxième tables ;
- des moyens d'analyse de la troisième table, délivrant au moins une information représentative d'une dispersion et/ou d'un écart par rapport audit objectif de vissage, résultant de perturbations induites par ladite visseuse ;
- des moyens de génération (62) d'un signal d'alerte, si ladite au moins une information représentative d'une dispersion et/ou d'un écart est supérieure à un seuil prédéterminé.

**15.** Produit programme d'ordinateur comprenant des instructions de code de programme pour la mise en œuvre du procédé de contrôle selon l'une quelconque des revendications 1 à 13, lorsque ledit programme est exécuté par un microprocesseur.

Fig. 1

Outil de vissage

_Fig. 2_

EP 3 650 166 A1

## Couple moyen (x$_{moy}$)

$6\sigma\ \%=6*\sigma/\ x_{moy}*100$

couple objectif

**Nombre de serrages**

$6*\sigma$ (en N.m)

$X_{moy}$ - 3*$\sigma$    $X_{moy}$ - 3*$\sigma$

**Couple**

<u>Fig. 3</u>

EP 3 650 166 A1

| 4.1 | Mise en marche de l'outil |
|---|---|

| 4.2 | Mesures du couple et enregistrement des valeurs |
|---|---|

| 4.3 | Détermination de la première table représentative du couple en fonction de l'angle, pour des valeurs d'angle de pas constant |
|---|---|

| 4.4 | Estimation de la caractéristique théorique du vissage |
|---|---|

4.5

| 4.5.1 | Obtention d'informations représentatives des perturbations générées par l'outil |
|---|---|
| 4.5.2 | Transformée de Fourier |
| 4.5.3 | Choix d'une caractéristique linéaire (raideur) et détermination de la courbe de montée en couple associée à la raideur du vissage |
| 4.5.4 | Sommation de la caractéristique linéaire et de la courbe représentant l'amplitude et la fréquence de la perturbation |
| 4.5.5 | Maximisation par suppression des décroissances du couple |
| 4.5.6 | Détermination d'une courbe normalisée par soustraction des valeurs de la caractéristique linéaire |

4.6

| 4.6.1 | Calcul de l'écart global par rapport audit objectif de vissage et de l'écart-type induits par chaque signature vibratoire |
|---|---|
| 4.6.2 | Calcul de l'écart global par rapport audit objectif de vissage et de la dispersion globale induits par ledit ensemble des signatures vibratoires sélectionnées |

| 4.7 | Evaluation des résultats, Emission d'un signal d'alerte le cas échéant |
|---|---|

Fig. 4

Fig. 5.1

Fig. 5.2

Fig. 5.3

Fig. 5.4

Fig. 6.1

Fig. 6.2

Fig. 6.3

Fig. 6.4

Europäisches Patentamt

European Patent Office

Office européen des brevets

# RAPPORT DE RECHERCHE EUROPEENNE

Numéro de la demande

EP 19 20 4422

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | US 4 259 775 A (ESHGHY SIAVASH)<br>7 avril 1981 (1981-04-07)<br>* figures 3,5,13 *<br>* colonne 5, lignes 22-40 *<br>* colonne 10, lignes 18-36 *<br>* colonne 20, ligne 44 - colonne 21, ligne 8 *<br>* colonne 22, ligne 19 - colonne 25, ligne 23 * | 1-4,9,<br>10,13-15<br>5-8,11,<br>12 | INV.<br>B23P19/06<br>B25B23/14<br>G05B19/4065<br><br>ADD.<br>G01L5/24<br>G08B21/18 |
| | ----- | | |
| A | FR 2 896 440 A1 (PEUGEOT CITROEN AUTOMOBILES SA [FR])<br>27 juillet 2007 (2007-07-27)<br>* page 1, ligne 24 - page 2, ligne 8 *<br>* page 4, ligne 20 - page 5, ligne 20 *<br>* figure 1 * | 1-15 | |
| | ----- | | |
| A | DE 10 2013 016068 A1 (BOSCH GMBH ROBERT [DE]) 2 avril 2015 (2015-04-02)<br>* alinéas [0020] - [0023]; figure 1 * | 1-15 | |
| | ----- | | DOMAINES TECHNIQUES RECHERCHES (IPC) |
| A | WO 2017/207550 A1 (ATLAS COPCO IND TECHNIQUE AB [SE])<br>7 décembre 2017 (2017-12-07)<br>* figures 4-6 *<br>* page 3, ligne 1 - page 4, ligne 20 * | 1-15 | B23P<br>G01L<br>B25B<br>G05B<br>G08B |
| | ----- | | G01M |
| A | US 4 000 782 A (FINKELSTON ROBERT J)<br>4 janvier 1977 (1977-01-04)<br>* figure 2 *<br>* colonne 1, ligne 50 - colonne 2, ligne 26 * | 1-15 | |
| | ----- | | |
| A,D | FR 2 882 287 A1 (GEORGES RENAULT SOC PAR ACTION [FR]) 25 août 2006 (2006-08-25)<br>* page 8, ligne 6 - page 9, ligne 9 *<br>* figures 1-3 * | 1-15 | |
| | ----- | | |

Le présent rapport a été établi pour toutes les revendications

| Lieu de la recherche | Date d'achèvement de la recherche | Examinateur |
|---|---|---|
| La Haye | 4 mars 2020 | Sérgio de Jesus, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 20 4422

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-03-2020

| Document brevet cité au rapport de recherche | | Date de publication | Membre(s) de la famille de brevet(s) | | Date de publication |
|---|---|---|---|---|---|
| US 4259775 | A | 07-04-1981 | AUCUN | | |
| FR 2896440 | A1 | 27-07-2007 | AUCUN | | |
| DE 102013016068 | A1 | 02-04-2015 | CN | 104516302 A | 15-04-2015 |
| | | | DE | 102013016068 A1 | 02-04-2015 |
| | | | SE | 1451131 A1 | 28-03-2015 |
| WO 2017207550 | A1 | 07-12-2017 | SE | 1630138 A1 | 31-10-2017 |
| | | | WO | 2017207550 A1 | 07-12-2017 |
| US 4000782 | A | 04-01-1977 | AUCUN | | |
| FR 2882287 | A1 | 25-08-2006 | CN | 101128286 A | 20-02-2008 |
| | | | EP | 1851008 A1 | 07-11-2007 |
| | | | FR | 2882287 A1 | 25-08-2006 |
| | | | JP | 4966209 B2 | 04-07-2012 |
| | | | JP | 2008531303 A | 14-08-2008 |
| | | | US | 2008271580 A1 | 06-11-2008 |
| | | | WO | 2006089925 A1 | 31-08-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 2882287